# EUROPEAN PATENT SPECIFICATION

(11) **EP 1 357 681 B1**
(45) Date of publication and mention of the grant of the patent: **15.06.2005**
(21) Application number: 02256708.5
(22) Date of filing: 26.09.2002
(51) Int. Cl.: H04B 7/005, H04L 1/00

(54) **Power controllable wireless mobile communications system of adaptive modulation and coding scheme and method therefor**
Drahtloses Kommunikationsystem und Verfahren zur steuerbaren Leistung und adaptative Modulation und Kodierung
Système et procédé de communication sans fil contrôlable par puissance avec modulation et codage adaptatifs

(30) Priority: 25.04.2002 KR 2002022703
(43) Date of publication of application: 29.10.2003
(73) Proprietor: SAMSUNG ELECTRONICS CO., LTD., Suwon-City, Kyungki-do (KR)
(72) Inventor: Yun, Sang-boh, Seongnam-city, Kyungki-do (KR)
(74) Representative: Ertl, Nicholas Justin

(56) References cited:
- WO-A-01/31824
- DE-C- 19 850 050
- US-B1- 6 262 994

## Description

The present invention relates to a power controllable wireless mobile communications system employing an adaptive modulation and coding scheme and a method therefor, and more particularly, to an apparatus which controls output power of a mobile station in a mobile communications system employing an adaptive modulation and coding scheme by using a signal-to-noise ratio (SNR) extracted from a backward signal which is transmitted from the mobile station to a base station and a method therefor.

In general, the ultimate aim of power control in a wireless communications system is to provide a predetermined quality of communications channels by compensating for signal attenuation in wireless channels so that a signal is received at an appropriate signal level requested by a receiving end. Also, as wireless communications networks have evolved to cellular networks, power control has become an important factor in system performance and capacity due to co-channel interference or multi-user interference. Particularly, in a code division multiple access (CDMA)-type mobile communications system, the capacity of the system is determined based on the signal-to-noise ratio (SNR) at a receiving end and as far as a requested SNR (SNR_REQ) that is a predetermined signal level requested by a demodulation end is maintained, the number of simultaneous users can increase. Accordingly, if a near-far problem in the backward direction is minimized by properly adjusting each user's power control, higher frequency efficiency than other transmission methods can be provided.

An example of a power control method in prior art mobile communications systems is a fixed step-size closed-loop power control (FCLPC) method recommended by Interim Standard (IS)-95. In the FCLPC method, a base station measures the strength of a signal of a mobile station (or a terminal) and then transmits a power control command to the mobile station. If the strength of a signal is lower than a requested SNR, the base station sets a power control bit contained in the power control command to '0' so that the transmission signal strength of the mobile station increases by +1dB. If the strength of the signal is higher than the requested SNR, the base station sets the power control bit to '1' so that the transmission signal strength decreases by 1dB. That is, in this method the scope of changes in the transmission power of the mobile station is fixed as ±1dB. Accordingly, this method may be effective for a situation where the scope of a signal is slowly changed and gradual but is not appropriate when the changing scope of a signal is wide because this method has a limit in its converging speed.

Recently, in order to provide high speed transmission rates, modulation methods having high frequency efficiency have been employed. However, if channel states become worse, the modulation methods having high frequency efficiency cannot be used. Therefore, an adaptive modulation and coding (AMC) scheme is used in which a modulation method and channel coding scheme can be adaptively selected according to the state of channels. In a system employing the AMC scheme, the SNR requested by a receiving end changes abruptly in the shape of a staircase.

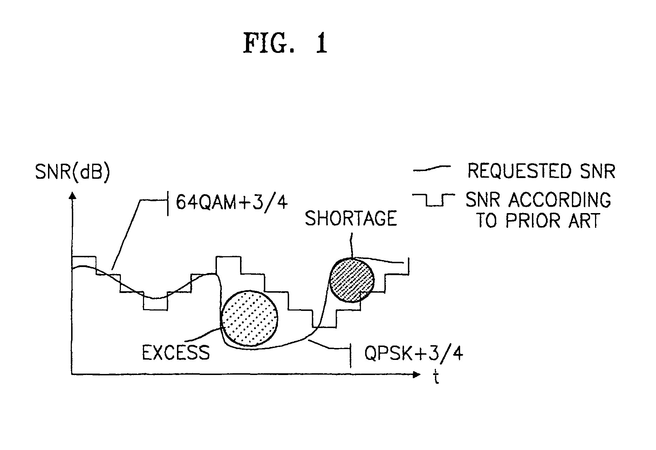

FIG. 1 is a graph showing changes of requested SNR with respect to time in a mobile communications system employing the adaptive modulation and coding (AMC) scheme and changes of SNR with respect to time according to a conventional power control method. In the graph, the curve indicates the requested SNR when the modulation method and coding changes from 64 quadratic amplitude modulation (QAM) +3/4 to quadrature phase-shift keying (QPSK) + 3/4 according to the AMC scheme and the staircase-shape line indicates the SNR according to the conventional power control method. The graph shows that the conventional method cannot satisfy the requested SNR.

That is, the conventional power control method does not consider the AMC scheme where the SNR is rapidly changed in each packet or frame. Accordingly, the conventional power control method cannot provide real-time control and may cause cutoff of a call due to an unstable receiving signal, and adverse side effects such as decrease in the number of simultaneous users due to waste of signal transmission power. In addition, if all mobile stations in a cell or in a network cause the result shown in FIG. 1, decrease in capacity may also happen. To solve this problem, methods for variable power control with respect to change in the level of a signal based on the moving speed of a mobile station have been proposed. However, these methods consider the changing scope of a signal with respect to the moving speed of a mobile station, assuming that an identical modulation and demodulation method is employed. Accordingly, for the AMC scheme in which modulation and demodulation schemes change, these methods are not optimized. Therefore, a power control method appropriate to a system employing the AMC scheme is needed.

WO-A-0131824 discloses a method of controlling uplink (reverse link) power level in a code division multiple access (CDMA) communication system. A power control step size is determined according to estimated movement of a mobile station.

According to an aspect of the present invention, there is provided a base station for controlling an output power of a mobile station in a mobile communications system, the base station comprising: a signal-to-noise ratio extracting unit which extracts a signal-to-noise ratio from a received signal which is processed using a predetermined modulation and coding scheme; a modulation and coding scheme determining unit which compares the extracted signal-to-noise ratio with a requested signal-to-noise ratio that is requested for the received signal, and determines a modulation and coding scheme based on conditions including at least the result of the comparison; a power control value determining unit which compares the extracted signal-to-noise ratio with a requested signal-to-noise ratio that is requested for a signal of the determined modulation and coding scheme, and determines a power control value according to the result of the comparison; and a signal generating unit which inserts a field indicating the determined modulation and coding scheme and a power control command field corresponding to the power control value, into data to be transmitted, processes the result according to the determined modulation and coding scheme and generates a transmission signal.

According to another aspect of the present invention, there is provided a mobile communications method for controlling an output power of a mobile station from a base station, the method comprising, at the base station: a. extracting an signal-to-noise ratio from a received signal which is processed using a predetermined modulation and coding scheme; b. comparing the extracted signal-to-noise ratio with a requested signal-to-noise ratio that is requested for the received signal, and determining a modulation and coding scheme based on conditions including at least the result of the comparison; c. if the modulation and coding scheme determined in the step b is different from the previous modulation and coding scheme, comparing the extracted signal-to-noise ratio with a requested signal-to-noise ratio that is requested for a signal of the determined modulation and coding scheme, and determining a power control value according to the result of the comparison; and d. inserting a field indicating the determined modulation and coding scheme and a power control command field corresponding to the power control value, into data to be transmitted, processing the result according to the determined modulation and coding scheme and generating a transmission signal.

The invention thus provides a mobile communications system employing an adaptive modulation and coding (AMC) scheme, the system adjusting the output power of a mobile station according to a changing scheme when a modulation and coding scheme changes, and a method therefor.

Examples of the invention will now be described in detail with reference to the attached drawings, in which:
FIG. 1 is a graph showing changes of requested SNR with respect to time in a mobile communications system employing an adaptive modulation and coding (AMC) scheme and changes of SNR with respect to time according to a conventional power control method;
FIG. 2 is a block diagram of a mobile communications system employing the AMC scheme according to the present invention;
FIG. 3 is a flowchart of a mobile communications method employing the AMC scheme according to the present invention; and
FIG. 4 is a graph showing changes of SNRs of the present invention and prior art.

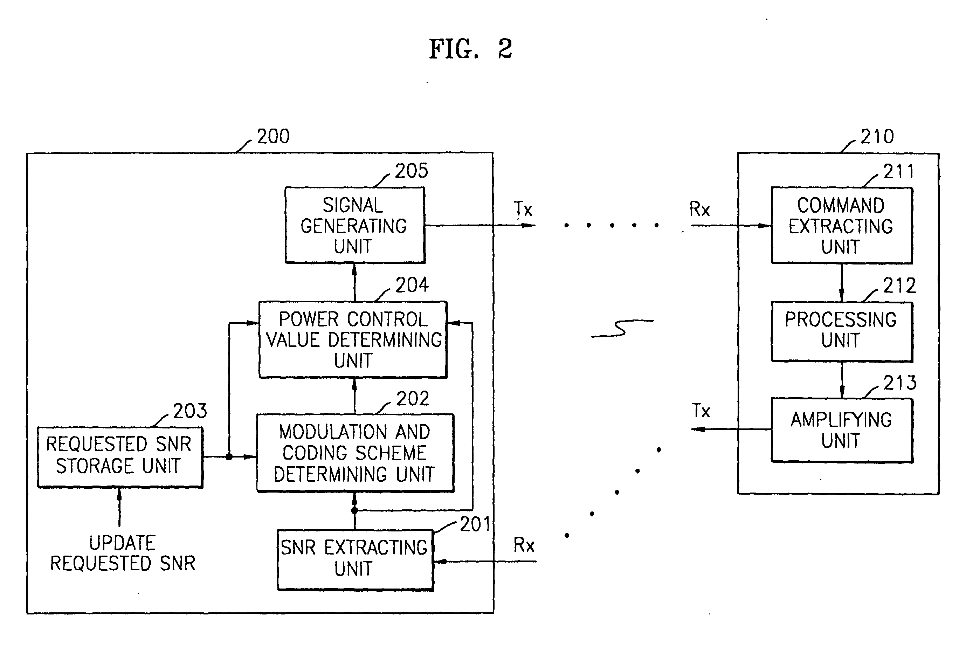

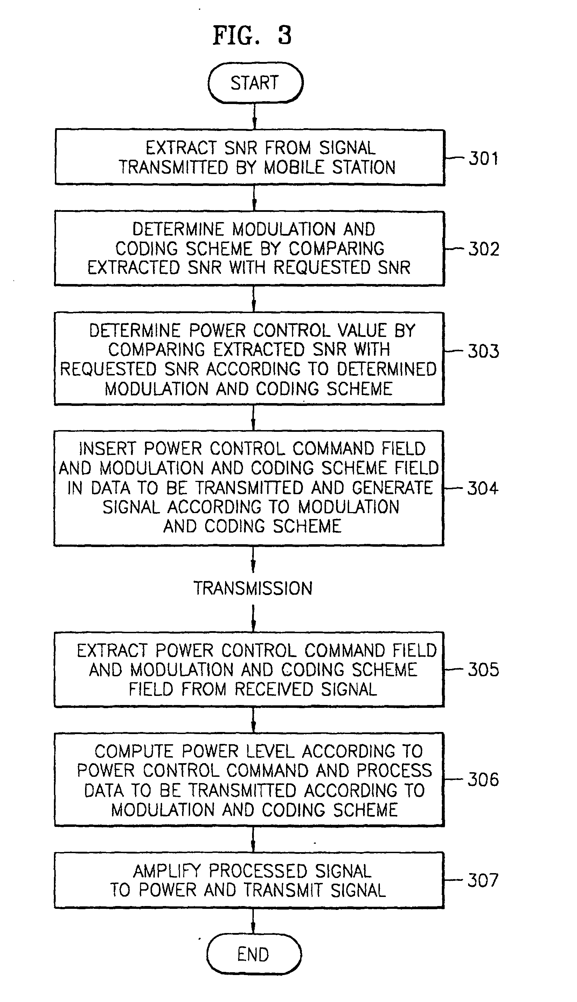

FIG. 2 is a block diagram of a mobile communications system employing the AMC scheme according to the present invention and FIG. 3 is a flowchart of a mobile communications method employing the AMC scheme according to the present invention.

Referring to FIG. 2, the mobile communications system comprises a base station 200 and a mobile station 210. The base station 200 comprises an SNR extracting unit 201, a modulation and coding scheme determining unit 202, a requested SNR storing unit 203, a power control value determining unit 204, and a signal generating unit 205. The mobile station 210 comprises a command extracting unit 211, a processing unit 212, and an amplifying unit 213. The operation of each element will now be explained referring to the flowchart of FIG. 3.

The SNR extracting unit 201 extracts the SNR from a signal transmitted by the mobile station 210 in step 301. The modulation and coding scheme determining unit 202 compares the extracted SNR with the requested SNR, and considering the comparison result, determines whether or not the current modulation and coding scheme should change, and to which scheme the current scheme should change if the scheme should change in step 302. Normally, the power scope of a signal used in a mobile communications system employing the AMC scheme is relatively wider than that of a signal used in a system not employing the AMC scheme and therefore determining a modulation and coding scheme for one mobile station in the former system has a greater influence on the cell. Accordingly, in order to maintain more stable capacity and performance, a modulation and coding scheme should be determined considering the load of the entire cell or the entire network as well as the channel state of one mobile station.

The requested SNR storing unit 203 stores the SNR requested by each signal type. For example, it stores the SNRs requested by respective modulation and coding scheme as in the table 1

**Table 1**

| Modulation/coding scheme | A | b | C |
|---|---|---|---|
| A | SNR Aa | SNR Ab | SNR Ac |
| B | SNR Ba | SNR Bb | SNR Bc |
| C | SNR Bc | SNR Cb | SNR Cc |

The requested SNR may be determined theoretically, or may be generated or updated according to the Quality of Service (QoS), such as a bit error rate, which a system should provide based on experiment results according to changes in bit error rates and frame error rates in a predetermined area or under a predetermined channel environment.

The power control value determining unit 204 reads a requested SNR corresponding to the modulation and coding scheme determined in the modulation and coding scheme determining unit 202, from the requested SNR storing unit 203, compares the requested SNR with the extracted SNR, and determines a power control value in step 303. The power control value may be determined with respect to the difference of the extracted SNR and the requested SNR, and can be expressed in an index form indicating the extent of power increase or decrease with respect to the difference of the extracted SNR and the requested SNR. In this case, the mobile station 210 may comprise additionally a storage unit for storing the power increase and decrease values corresponding to the indices. If the determination of the modulation and coding scheme determining unit 202 determines to maintain the same modulation and coding scheme as the previous one, the power control value determining unit 204 can determine a power control value according to the prior art FCLPC method. At this time, only the result of the comparison of the extracted SNR with the requested SNR may be considered in determining a power control value.

The signal generating unit 205 inserts a power control command field and a field indicating the modulation and coding scheme into data to be transmitted, processes the data according to the determined modulation and coding scheme to generate a signal, and transmits the signal to the mobile station 210 in step 304.

The command extracting unit 211 of the mobile station 210 extracts the power control command field and the modulation and coding scheme field contained in the received signal in step 305.

The processing unit 212 computes the power level according to the command value of the extracted power control command field, processes data to be transmitted according to the modulation and coding scheme in the modulation and coding scheme field, and generates a signal in step 306. The amplifying unit 213 amplifies the signal generated in the processing unit 212 according to the power value computed in the processing unit 212 and transmits the signal to the base station 200 in step 307.

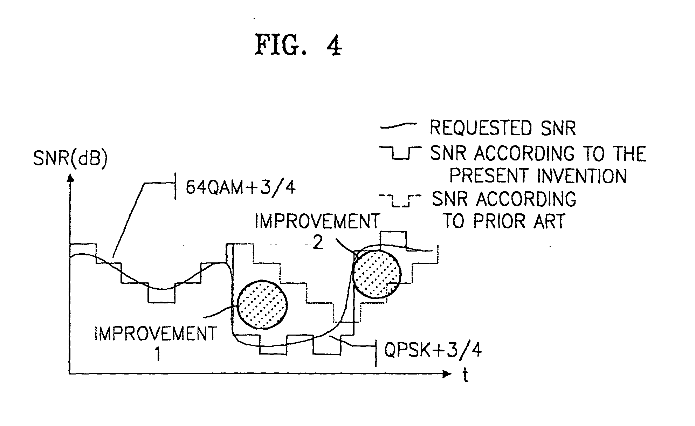

FIG. 4 is a graph showing changes of SNRs of the present invention and prior art. Referring to FIG. 4, the curve indicates the requested SNR when the modulation method and coding changes from 64 quadratic amplitude modulation (QAM) +3/4 to quadrature phase-shift keying (QPSK) + 3/4 according to the AMC scheme and the staircase-shape solid line indicates the SNR according to the power control of the present invention. The staircase-shape dotted line indicates the SNR according to the conventional power control. The graph shows that the SNR according to the present invention well matches the requested SNR while the conventional method cannot satisfy the requested SNR.

According to the present invention, as shown in FIG. 4, the speed converging into the requested SNR is high such that real-time power control on the transmission power of a mobile station is enabled and waste of transmission power is minimized. As a result, the number of simultaneous users in a cell can increase and consumption of battery power can be minimized. Also, by minimizing cutoff of calls due to shortage of transmission power, QoS improves.

In addition, since a modulation and coding scheme is determined, and then call admission is controlled considering the load of the cell and the network, stable service in the entire network can be provided.

## Claims

1. A base station (200) for controlling an output power of a mobile station (210) in a mobile communications system, the base station comprising:
a signal-to-noise ratio extracting unit (201) which extracts a signal-to-noise ratio from a received signal which is processed using a predetermined modulation and coding scheme;
a modulation and coding scheme determining unit (202) which compares the extracted signal-to-noise ratio with a requested signal-to-noise ratio that is requested for the received signal, and determines a modulation and coding scheme based on conditions including at least the result of the comparison;
a power control value determining unit (204) which compares the extracted signal-to-noise ratio with a requested signal-to-noise ratio that is requested for a signal of the determined modulation and coding scheme, and determines a power control value according to the result of the comparison; and
a signal generating unit (205) which inserts a field indicating the determined modulation and coding scheme and a power control command field corresponding to the power control value, into data to be transmitted, processes the result according to the determined modulation and coding scheme and generates a transmission signal.

2. The base station of claim 1, wherein the modulation and coding scheme determining unit or the power control value determining unit further comprises an signal-to-noise ratio storing unit (203) which stores signal-to-noise ratios requested for signals processed by each modulation and coding scheme.

3. A mobile communication system comprising the base station of claim 1 or 2 and the mobile station, the mobile station comprising:
a command extracting unit (211) which extracts the power control command field and the field indicating a modulation and coding scheme from a signal transmitted by the signal generating unit;
a processing unit (212) which computes a power level according to the power control command of the power control command field, processes data to be transmitted according to the content of the field indicating the modulation and coding scheme, and generates a signal to be transmitted to the signal-to-noise ratio extracting unit; and
an amplifying unit (213) which is placed between the signal-to-noise ratio extracting unit and the processing unit and adjusts the signal generated in the processing unit, by amplifying the signal according to the power level.

4. A mobile communications method for controlling an output power of a mobile station from a base station, the method comprising, at the base station:
a. extracting a signal-to-noise ratio from a received signal which is processed using a predetermined modulation and coding scheme (301);
b. comparing the extracted signal-to-noise ratio with a requested signal-to-noise ratio that is requested for the received signal, and determining a modulation and coding scheme based on conditions including at least the result of the comparison (302);
c. if the modulation and coding scheme determined in the step b is different from the previous modulation and coding scheme, comparing the extracted signal-to-noise ratio with a requested signal-to-noise ratio that is requested for a signal of the determined modulation and coding scheme, and determining a power control value according to the result of the comparison (303); and
d. inserting a field indicating the determined modulation and coding scheme and a power control command field corresponding to the power control value, into data to be transmitted, processing the result according to the determined modulation and coding scheme and generating a transmission signal (304).

5. The mobile communications method of claim 4, wherein the requested signal-to-noise ratio is one stored in a table of signal-to-noise ratios obtained by theoretical computation or experiments for each modulation and coding scheme which can be applied to the signal.

6. The mobile communications method of claim 4 or 5, wherein in the step c, if the modulation and coding scheme determined in the step b is the same as the previous modulation and coding method, the power control value is determined to be adjusted by a predetermined change value as in a conventional fixed step-size closed-loop power control method.

7. The mobile communications method of any one of claims 4 to 6, further comprising, at the mobile station:
e. extracting the power control command field and the field indicating a modulation and coding scheme from a signal which is generated and transmitted in the step d (305);
f. computing a power level according to the power control command of the power control command field, processing data to be transmitted according to the content of the field indicating the modulation and coding scheme, and generating a signal to be transmitted to the signal-to-noise ratio extracting unit (306); and
g. amplifying the signal generated in step f by the power level and transmitting the signal (307).

## Patentansprüche

1. Basisstation (200) zur Steuerung einer Ausgangsleistung einer mobilen Station (210) in einem Mobilkommunikationssystem, wobei die Basisstation umfasst:
eine Extraktionseinheit (201) für das Signal-Rausch-Verhältnis, das ein Signal-Rausch-Verhältnis aus einem empfangenen Signal extrahiert, das unter Verwendung eines bestimmten Modulations- und Codierungsschemas verarbeitet wird,
eine Bestimmungseinheit (202) für das Modulations- und Codierungsschema, die das extrahierte Signal-Rausch-Verhältnis mit einem erforderlichen Signal-Rausch-Verhältnis vergleicht, das für das empfangene Signal erforderlich ist, und ein Modulations- und Codierungsschema aufgrund von Bedingungen bestimmt, die mindestens das Ergebnis des Vergleichs beinhalten;
eine Bestimmungseinheit (204) für den Leistungssteuerungswert, die das extrahierte Signal-Rausch-Verhältnis mit einem erforderlichen Signal-Rausch-Verhältnis vergleicht, das für ein Signal des bestimmten Modulations- und Codierungsschemas erforderlich ist, und bestimmt einen Leistungssteuerungswert nach dem Ergebnis des Vergleichs; und
eine Signalerzeugungseinheit (205), die ein Feld, das das bestimmte Modulations- und Codierungsschema angibt, und ein Leistungssteuerungsbefehlsfeld, das dem Leistungsteuerungswert entspricht, in zu übertragende Daten einsetzt, das Ergebnis nach dem bestimmten Modulations- und Codierungsschema verarbeitet und ein Übertragungssignal erzeugt.

2. Basisstation nach Anspruch 1, worin die Bestimmungseinheit für das Modulations- und Codierungsschema oder die Bestimmungseinheit für den Leistungssteuerungswert ferner eine Speichereinheit (203) für das Signal-Rausch-Verhältnis umfasst, die für in jedem Modulations-und Codierungsschema verarbeitete Signale erforderliche Signal-Rausch-Verhältnisse speichert.

3. Mobilkommunikationssystem umfassend die Basisstation von Anspruch 1 oder 2 und die mobile Station, wobei die mobile Station umfasst:
eine Befehlsextraktionseinheit (211), die das Leistungssteuerungsbefehtsfeld und das Feld, das ein Modulations- und Codierungsschema angibt, aus einem von der Signalerzeugungseinheit übertragenen Signal extrahiert;
eine Verarbeitungseinheit (211), die ein Leistungsniveau gemäß dem Leistungssteuerungsbefehl des Leistungssteuerungsbefehlsfeldes berechnet, zu übertragende Daten gemäß dem Inhalt des Felds, das ein Modulations- und Codierungsschema angibt, verarbeitet, und ein an die Extraktionseinheit für das Signal-Rausch-Verhältnis zu übertragendes Signal erzeugt; und
eine Verstärkereinheit (213), die zwischen die Extraktionseinheit für das Signal-Rausch-Verhältnis und die Verarbeitungseinheit platziert ist und das in der Verarbeitungseinheit erzeugte Signal durch Verstärken des Signals gemäß dem Leistungsniveau einstellt.

4. Mobilkommunikationsverfahren zur Steuerung einer Ausgangsleistung einer mobilen Station von einer Basisstation, wobei das Verfahren an der Basisstation umfasst:
a. Extrahieren eines Signal-Rausch-Verhältnisses aus einem empfangenen Signal, das unter Verwendung eines bestimmten Modulations- und Codierungsschemas (301) verarbeitet wird;
b. Vergleichen des extrahierten Signal-Rausch-Verhältnisses mit einem erforderlichen Signal-Rausch-Verhältnis, das für das empfangene Signal erforderlich ist, und Bestimmen eines Modulations- und Codierungsschemas ausgehend von Bedingungen, die mindestens das Ergebnis des Vergleichs (302) beinhalten;
c. wenn das in Schritt b bestimmte Modulations- und Codierungsschema sich vom vorhergehenden Modulations- und Codierungsschema unterscheidet, Vergleichen des extrahierten Signal-Rausch-Verhältnisses mit einem erforderlichen Signal-Rausch-Verhältnis, das für ein Signal des bestimmten Modulations- und Codierungsschemas erforderlich ist, und Bestimmen eines Leistungssteuerungswerts nach dem Ergebnis des Vergleichs (303); und
d. Einsetzen eines Felds, das das bestimmte Modulations- und Codierungsschema angibt, und ein Leistungssteuerungsbefehlsfeld, das dem Leistungsteuerungswert entspricht, in zu übertragende Daten, Verarbeiten des Ergebnisses nach dem bestimmten Modulations- und Codierungsschema und Erzeugen eines Übertragungssignals (304).

5. Mobilkommunikationsverfahren nach Anspruch 4, worin das erforderliche Signal-Rausch-Verhältnis eines ist, das in einer Tabelle von Signal-Rausch-Verhältnissen gespeichert ist, die durch theoretische Berechnung oder Experimente für jedes Modulations- und Codierungsschema erhalten sind, das auf das Signal angewendet werden kann.

6. Mobilkommunikationsverfahren nach Anspruch 4 oder 5, worin in Schritt c, wenn das in Schritt b bestimmte Modulations- und Codierungsschema das selbe ist wie das vorhergehende Modulations- und Codierungsverfahren, wird der Leistungssteuerungswert bestimmt, so dass er in einem bestimmten Veränderungswert eingestellt wird, wie in einem herkömmlichen Leistungssteuerungsverfahren mit geschlossenem Regelkreis und festen Schritten.

7. Mobilkommunikationsverfahren nach einem der Ansprüche 4 bis 6, ferner umfassend an der mobilen Station:
e. Extrahieren des Leistungssteuerungsbefehlsfelds und des Felds, das ein Modulations- und Codierungsschema angibt, aus einem Signal, das in Schritt d (305) erzeugt und übertragen ist;
f. Berechnen eines Leistungsniveaus nach dem Leistungssteuerungsbefehl des Leistungssteuerungsbefehlsfelds, Verarbeiten von zu übertragenden Daten gemäß dem Inhalt des Feldes, das das Modulations-und Codierungsschema angibt, und Erzeugen eines an die Extraktionseinheit des Signal-Rausch-Verhältnisses zu übertragenden Signals (306); und
g. Verstärken des in Schritt f erzeugten Signals durch das Leistungsniveau und Übertragen des Signals (307).

## Revendications

1. Station de base (200) pour contrôler une puissance de sortie d'une station mobile (210) dans un système de communication mobile, la station de base comprenant :
■ une unité d'extraction de rapport signal sur bruit (201) qui extrait un rapport signal sur bruit à partir d'un signal reçu qui est traité à l'aide d'une modulation et d'un codage prédéterminés ;
■ une unité de détermination de la modulation et du codage (202) qui compare le rapport signal sur bruit extrait avec un rapport signal sur bruit demandé qui est demandé pour le signal reçu, et qui détermine une modulation et un codage sur la base d'états comprenant au moins le résultat de la comparaison ;
■ une unité de détermination d'une valeur de contrôle de la puissance (204) qui compare le rapport signal sur bruit extrait avec un rapport signal sur bruit demandé qui est demandé pour un signal de la modulation et du codage déterminés, et qui détermine une valeur de contrôle de la puissance en fonction du résultat de la comparaison ; et
■ une unité émettrice de signaux (205) qui insère un champ indiquant la modulation et le codage déterminés et un champ de commande du contrôle de la puissance correspondant à la valeur de contrôle de la puissance, dans les données à transmettre, traite le résultat en fonction de la modulation et du codage déterminés et émet un signal de transmission.

2. Station de base selon la revendication 1, dans laquelle l'unité de détermination de la modulation et du codage ou l'unité de détermination de la valeur de contrôle de la puissance comprend en outre une unité de mémorisation du rapport signal sur bruit (203) qui mémorise les rapports signal sur bruit demandés pour les signaux traités par chaque modulation et chaque codage.

3. Système de communication mobile comprenant la station de base selon la revendication 1 ou 2 et la station mobile, la station mobile comprenant :
■ une unité d'extraction de commande (211) qui extrait le champ de commande du contrôle de la puissance et le champ indiquant une modulation et un codage à partir d'un signal transmis par l'unité émettrice de signaux ;
■ une unité centrale (212) qui calcule un niveau de puissance en fonction de la commande du contrôle de la puissance du champ de commande du contrôle de la puissance, traite les données à transmettre en fonction du contenu du champ indiquant la modulation et le codage et émet un signal à transmettre à l'unité d'extraction de rapport signal sur bruit ; et
■ une unité d'amplification (213) qui est placée entre l'unité d'extraction de rapport signal sur bruit et l'unité centrale et ajuste le signal émis dans l'unité centrale, en amplifiant le signal en fonction du niveau de puissance.

4. Procédé de communication mobile pour contrôler une puissance de sortie d'une station mobile provenant d'une station de base, le procédé comprenant, au niveau de la station de base :
a. l'extraction d'un rapport signal sur bruit à partir d'un signal reçu qui est traité à l'aide d'une modulation et d'un codage prédéterminés (301) ;
b. la comparaison du rapport signal sur bruit extrait avec un rapport signal sur bruit demandé qui est demandé pour le signal reçu et la détermination d'une modulation et d'un codage sur la base d'états comprenant au moins le résultat de la comparaison (302) ;
c. si la modulation et le codage déterminés à l'étape b sont différents de la modulation et du codage précédents, la comparaison du rapport signal sur bruit extrait avec un rapport signal sur bruit demandé qui est demandé pour un signal de la modulation et du codage déterminés et la détermination d'une valeur de contrôle de la puissance en fonction du résultat de la comparaison (303) ; et
d. l'insertion d'un champ indiquant la modulation et le codage déterminés et d'un champ de commande du contrôle de la puissance correspondant à la valeur de contrôle de la puissance, dans les données à transmettre, le traitement du résultat en fonction de la modulation et du codage déterminés et l'émission d'un signal de transmission (304).

5. Procédé de communication mobile selon la revendication 4, dans lequel le rapport signal sur bruit demandé est enregistré dans une table de rapports signal sur bruit obtenue par calcul théorique ou par expérimentations pour chaque modulation et chaque codage pouvant être appliqués au signal.

6. Procédé de communication mobile selon la revendication 4 ou 5, dans lequel à l'étape c, si la modulation et le codage déterminés à l'étape b sont identiques au procédé de modulation et de codage précédent, la valeur de contrôle de la puissance est déterminée de manière à être ajustée par une valeur modifiée prédéterminée comme dans un procédé de contrôle de la puissance à taille de pas fixe et à boucle fermée conventionnel.

7. Procédé de communication mobile selon l'une quelconque des revendications 4 à 6, comprenant en outre, au niveau de la station mobile :
e. l'extraction du champ de commande du contrôle de la puissance et du champ indiquant une modulation et un codage à partir d'un signal émis et transmis à l'étape d (305) ;
f. le calcul d'un niveau de puissance en fonction de la commande du contrôle de la puissance du champ de commande du contrôle de la puissance, le traitement des données à transmettre en fonction du contenu du champ indiquant la modulation et le codage et l'émission d'un signal à transmettre à l'unité d'extraction de rapport signal sur bruit (306) ; et
g. l'amplification du signal émis à l'étape f par le niveau de puissance et la transmission du signal (307).
